# EUROPÄISCHE PATENTSCHRIFT

(11) **EP 1 414 897 B1**
(45) Veröffentlichungstag und Bekanntmachung des Hinweises auf die Patenterteilung: **27.04.2005**
(21) Anmeldenummer: 02791453.0
(22) Anmeldetag: 16.07.2002
(51) Int. Cl.: C08L 25/04

(54) **SPANNUNGSRISSBESTÄNDIGES, GLÄNZENDES SCHLAGZÄH-POLYSTYROL**
SHINY, IMPACT-RESISTANT POLYSTYRENE WHICH IS RESISTANT TO TENSION CRACKS
POLYSTYRENE RESILIENT, BRILLANT, RESISTANT AUX FISSURES PAR CONTRAINTE

(30) Priorität: 27.07.2001 DE 10136133
(43) Veröffentlichungstag der Anmeldung: 06.05.2004
(73) Patentinhaber: BASF AKTIENGESELLSCHAFT, 67056 Ludwigshafen (DE)
(72) Erfinder: WAGNER, Daniel, 67098 Bad Dürkheim (DE); WEINKÖTZ, Peter, 68229 Mannheim (DE); MORGENSTERN, Herbert, 67158 Ellerstadt (DE); RENNER, Hans-Jürgen, 67141 Neuhofen (DE)
(86) Internationale Anmeldenummer: PCT/EP2002/007886
(87) Internationale Veröffentlichungsnummer: WO 2003/011964

(56) Entgegenhaltungen:
- WO-A-99/46330
- US-A- 4 371 663

## Beschreibung

Die Erfindung betrifft ein Verfahren zur Erhöhung der Spannungsrissbeständigkeit von Polystyrolformmassen, spannungsrissbeständige, glänzende Polystyrolformmassen, Verbundschichtplatten oder -folien mit einer solchen Deckschicht sowie Verfahren zur Herstellung von Kühlgeräteformteilen.

Innenbehälter und Türinnenverkleidungen in Kühl- und Gefriergeräten werden heute überwiegend aus speziellen, gegen Polyurethantreibmittel, wie Cyclopentan, spannungsrissbeständigen Schlagfestpolystyrolen (ESCR-HIPS) durch Thermoformen aus extrudierten, flächigen Halbzeugen (Platten oder Folien) hergestellt. Spannungsrissbeständige Schlagfestpolystyrole weisen in der Regel eine sehr matte Oberfläche auf. Dieser Nachteil kann durch Coextrusion einer Glanzschicht oder Laminieren einer Folie überwunden werden.

Bei der Glanzschichtcoextrusion auf ESCR-HIPS werden heute überwiegend schlagfeste Polystyrole mit hohem Oberflächenglanz oft auch in Abmischung mit leichtfließenden Standardpolystyrolen (GPPS) eingesetzt. Nachteilig ist hierbei die deutliche Verschlechterung der Spannungsrißbeständigkeit gegenüber Ölen, Fetten und Reinigungsmitteln. Dies führt zu vermehrten Schadensfällen durch Rissbildung, insbesondere bei Kühl- und Gefriergeräteinnenbehältern.

Polystyrolformmassen aus Polystyrol und einem thermoplastischen Elastomer auf Basis von Styrol (S-TPE) sind bekannt und beispielsweise beschrieben in WO 96/20248 und WO 99/46330. Dort wird das S-TPE hauptsächlich zur Erhöhung der Zähigkeit oder Einstellung von mechanischen Eigenschaften eingesetzt. Die OZ WO 00/24578 beschreibt die Einarbeitung von Gleitmittel in Form eines Styrol-Butadien-Blockcopolymeren enthaltenden Masterbatches in Verbundplatten mit Polystyroldeckschichten. Die in der WO 96/23823und WO 97/46608 beschriebenen Folien enthalten aufgrund der Elastomereigenschaften und der Transparenz ein S-TPE als Hauptkomponente.

Aufgabe der Erfindung war es daher, den vorgenannten Nachteilen abzuhelfen und ein Verfahren zur Erhöhung der Spannungsrissbeständigkeit von Polystyrolformmassen sowie spannungsrissbeständige und gleichzeitig glänzende Polystyrolformmassen bereitzustellen.

Demgemäß wurde ein Verfahren zur Erhöhung der Spannungsrissbeständigkeit von Polystyrolformmassen gefunden, wobei man der Polystyrolformmassen ein thermoplastisches Elastomer auf Basis von Styrol (S-TPE) zumischt.

Bevorzugt weist das S-TPE eine Reißdehnung von mehr als 300 %, besonders bevorzugt mehr als 500 %, insbesondere mehr als 600 %, gemessen nach ISO 527, auf und wird in einer Menge im Bereich von 1 bis 40 Gew.-%, bevorzugt 5 bis 30 Gew.-%, bezogen auf die Polystyrolformmasse, zugemischt. Besonders bevorzugt mischt man als S-TPE ein lineares oder sternförmiges Styrol-Butadien-Blockcopolymer mit außenliegenden Polystyrolblöcken S und dazwischenliegenden Styrol-Butadien-Copolymerblöcken mit statistischer Styrol/Butadien-Verteilung (S/B)_{random} oder einem Styrolgradienten (S/B)ₜₐₚₑᵣ zu.

Der Gesamtbutadiengehalt liegt bevorzugt im Bereich von 15 bis 50 Gew.-%, besonders bevorzugt im Bereich von 25 bis 40 Gew.-%, der Gesamtstyrolgehalt liegt entsprechend bevorzugt im Bereich von 50 bis 85 Gew.-%, besonders bevorzugt im Bereich von 60 bis 75 Gew.-%.

Vorzugsweise besteht der Styrol-Butadien-Block (S/B) aus 30 bis 75 Gew.-% Styrol und 25 bis 70 Gew.-% Butadien. Besonders bevorzugt hat ein Block (S/B) einen Butadienanteil von 35 bis 70 Gew.-% und einen Styrolanteil von 30 bis 65 Gew-%.

Der Anteil der Polystyrolblöcke S. liegt bevorzugt im Bereich von 5 bis 40 Gew.-%, insbesondere im Bereich von 25 bis 35 Gew.-%, bezogen auf das gesamte Blockcopolymer. Der Anteil der Copolymerblöcke S/B liegt bevorzugt im Bereich von 60 bis 95 Gew.-%, insbesondere im Bereich von 65 bis 75 Gew.-%.

Besonders bevorzugt sind lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken (S/B)_{random}. Solche Blockcopolymeren sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97/40079 beschrieben.

Als Polystyrolformmasse werden glänzende, schlagzähe Polystyrole (HIPS) mit einem Oberflächenglanz von mindestens 40%, bevorzugt mindestens 70, insbesondere mindestens 80%, gemessen unter einem Messwinkel von 60° nach DIN 67530, oder Mischungen davon mit Standardpolystyrol (GPPS) verwendet.

Je nach Art des zugemischten S-TPE können schon geringe Mengen die Spannungsrissbeständigkeit der Polystyrolformmasse erhöhen. Bevorzugte Polystyrolformmassen enthalten
A) 70 bis 95 Gew.-%, bevorzugt 75 bis 85 Gew.-% eines glänzenden, schlagzähen Polystyrol (HIPS) mit einem Oberflächenglanz von mehr als 40%, bevorzugt mehr als 70% und besonders bevorzugt mehr als 80%, gemessen unter einem Messwinkel von 60° nach DIN 67530, oder eine Mischung davon mit Standardpolystyrol (GPPS) und
B) 5 bis 30 Gew.-%, bevorzugt 15 bis 25 Gew.-% eines thermoplastischen Elastomeren auf Basis von Styrol (S-TPE).

Als S-TPE eignen sich die oben beschriebenen Styrol-Butadien-Blockcopolymeren.

Die erfindungsgemäßen Polystyrolformmassen können darüber hinaus die üblichen Hilfs- und Zusatzstoffe, wie Gleitmittel, Antiblockmittel, Trennmittel, Stabilisatoren, Antistatika, Flammschutzmittel, Farbmittel etc. enthalten.

Gemäß einer weiteren Ausführungsform der Erfindung können die spannungsrissbeständigen, glänzenden Polystrolformmassen als Glanzdeckschicht in Verbundplatten oder -folien verwendet werden. Bevorzugte Verbundschichtplatten oder -folien enthalten eine Substratschicht aus einem amorphen Styrolpolymeren, wie Standardpolystyrol (GPPS) oder Schlagzäh-Polystyrol (HIPS) und eine Deckschicht aus der oben beschriebenen, spannungrissbeständigen und glänzenden Polystyrolformmasse.

Bevorzugt enthält die Substratschicht ein spannungsrißbeständiges, schlagzähes Polystyrol, beispielsweise wenn man die Verbundschichtplatte zur Herstellung von Kühlgeräteformteilen einsetzen möchte.

Besonders bevorzugt besteht die Substratschicht aus 20 bis 100 Gew.-% Schlagfestpolystyrol (HIPS) und 0 bis 80 Gew.% Standard-Polystyrol. Vorteilhafterweise setzt man Schlagfest-Polystyrole mit erhöhter Spannungsrissbeständigkeit, sogenannte ESCR-HIPS ein. Diese weisen in der Regel einen Gelgehalt von mindestens 30 % und eine mittels Lichtstreung ermittelte, mittlere Teilchengröße der dispersen Kautschukphase von mindestens 5 µm auf.

Die Deckschicht weist in der Regel eine Schichtdicke von 1 bis 10 %, bevorzugt 2 - 5 %, bezogen auf die Gesamtdicke der Verbundschichtplatte oder -folie, auf. Die Gesamtdicke hängt von der Anwendung ab und kann im allgemeinen 0,1 bis 10 mm, bevorzugt 0,5 - 5 mm, betragen.

Bevorzugt enthält die Deckschicht 0,1 bis 5 Gew.-%, bezogen auf die Polystyrolformmasse, eines Gleitmittels, wie Stearate.

Aufgrund ihrer erhöhten Spannungsrissbeständigkeit bei gleichzeitig hohem Oberflächenglanz eignen sich sowohl die erfindungsgemäßen Polystyrolformmassen als auch die diese als Deckschicht enthaltenden Verbundschichtplatten oder -folien zur Herstellung von Kühlgeräteformteilen.

### Beispiele:

### Beispiel PS 1:

Ein Styrol-Butadien-Blockcopolymer (S-TPE) entsprechend WO 95/35335 (Styroflex® 6105) und ein leichtfließendes schlagzähes Polystyrol (Polystyrol 454 C der BASF) wurden jeweils in Form von Granulaten in einem Rhönradmischer vermischt und anschließend im Spritzguss zu Zugprüfstäben nach ISO 3167 verarbeitet.

### Beispiel PS 2:

Beispiel 1 wurde wiederholt mit dem Unterschied, dass als schlagzähes Polystyrol (Polystyrol 473 D der BASF) eingesetzt wurde.

Zur Beurteilung der Spannungsrissbeständigkeit (ESCR) wurde die in Anlehnung der in der ISO 4599 beschriebenen "Biegestreifenmethode" ermittelte Bruchdehnung herangezogen. Hierfür wurden die spritzgegossenen Zugprüfstäbe über Biegeschablonen mit dem Radius 170 mm gespannt und 10 bzw. 50 Minuten in einem Autoklaven bei 300 mbar Druck einer Cyclopentan-Atmosphäre (CP) ausgesetzt und anschließend im Zugversuch gemäß ISO 527 gemessen. Als Referenz wurden Zugprüfstäbe ohne Medieneinwirkung (Luft) gemessen.

Die Zusammensetzung der Proben und Ergebnisse der Beispiele 1 und 2 sind in Tabelle 1 zusammengefasst.

**Tabelle 1:**

| Spannungrissbeständigkeit von spritzgegossenen Proben in Abhängigkeit von der Einwirkungsdauer von Cyclopentan, gemessen als Bruchdehnung [%] | | | | |
|---|---|---|---|---|
| Beispiel | S-TPE [Gew.%] | 0 min | 10 min | 50 min |
| PS 1 | 0 | 28 | 12 | 27 |
| PS 1 | 5 | 36 | 35 | 45 |
| PS 1 | 10 | 47 | 39 | 59 |
| PS 1 | 15 | 63 | 74 | 63 |
| PS 1 | 20 | 74 | 87 | 85 |
| PS 2 | 0 | 41 | 20 | 27 |
| PS 2 | 5 | 44 | 34 | 50 |
| PS 2 | 10 | 39 | 40 | 57 |
| PS 2 | 15 | 48 | 55 | 85 |
| PS 2 | 20 | 71 | 105 | 116 |

### Verbundschichtplatten mit Glanzdeckschicht:

### Beispiele B1 bis B7 und Vergleichsversuche V1 und V2

Verbundschichtplatten mit einer 2,9 mm dicken Substratschicht (A) und einer 0,1 mm dicken Deckschicht (B) und der in Tabelle 2 aufgeführten Zusammensetzung wurden durch Coextrusion hergestellt.

Produkte für die Substratschicht A:
(A 1): Schlagfestes Polystyrol mit einer Schmelzevolumenrate MVR 200/5 von 3,4 , einem Zug-E-Modul von 1600 MPa und einer Streckspannung von 21 MPa (Polystyrol 2710 der BASF AG).
(A 2): Schlagfestes Polystyrol mit einer Schmelzevolumenrate MVR 200/5 von 6,5 , einem Zug-E-Modul von 1400 MPa und einer Streckspannung von 17 MPa (Polystyrol 2712 der BASF AG).
(A 3): Mischung aus einem schlagfesten Polystyrol mit einer Schmelzevolumenrate MVR 200/5 von 4, einem Zug-E-Modul von 1800 MPa und einer Streckspannung von 24 MPa (Polystyrol 486 M der BASF AG) und einem Standardpolystyrol mit einer Schmelzevolumenrate MVR 200/5 von 3, einem Zug-E-Modul von 3300 MPa und einer Vicat-B Temperatur von 101°C (Polystyrol 158 K der BASF AG); Abmischverhältnis 80:20.

### Produkte für die Deckschicht:

Hochglänzendes Schlagzäh-Polystyrol mit einer Schmelzevolumenrate MVR 200/5 von 4, einem Zug-E-Modul von 1900 MPa und einer Streckspannung von 32 MPa (Polystyrol 585 K, BASF)

Hochglänzendes Schlagzäh-Polystyrol (Polystyrol 555 G, BASF)

Leichfließendes Standardpolystyrol mit einer Schmelzevolumenrate MVR 200/5 von 10, einem Zug-E-Modul von 3300 MPa und einer Streckspannung von 46 MPa (Polystyrol 143 E, BASF)

Styrol-Butadien-Blockcopolymer entsprechend WO 95/35335 (Styroflex@ BX 6105, BASF) mit einer Reissdehnung nach DIN 53455 von über 650 % (S-TPE).

**Tabelle 2:**

| Zusammensetzung der Schichten der Verbundplatten: | | |
|---|---|---|
| Versuch | (A) | Zusammensetzung der Deckschicht (B); (Angabe von Gew.-Anteilen) |
| V 1 | A 1 | PS 585 K |
| V 2 | A 1 | PS 585 K : 143 E (2:1) |
| B 1 | A 2 | PS 585 K : Styroflex BX 6105 (97 : 3) |
| B 2 | A 1 | PS 585 K : Styroflex BX 6105 (95 : 5) |
| B 3 | A 1 | PS 585 K : Styroflex BX 6105 (90 : 10) |
| B 5 | A 2 | PS 585 K : Styroflex BX 6105 (80 : 20) |
| B 5 | A 3 | PS 585 K : styroflex BX 6105 (60 : 40) |
| B 6 | A 1 | PS 555 G : PS 143 E : Styroflex BX 6105 (50:30:20) |
| B 7 | A 1 | PS 585 K : PS 143 E : Styroflex BX 6105 (50:35:15) |

Die Beispiele B1 bis B4, B6 und B7 und Vergleichsversuche V1 und V2 wiesen an der Deckschicht einen sehr hohen Oberflächenglanz zwischen 85 und 95 % bei einem Messwinkel von 60° auf (nach DIN 67530) auf. Der Oberflächenglanz für Beispiel B5 betrug 75 %.

Zur Beurteilung der Spannungsrissbeständigkeit (ESCR) wurde die in Anlehnung der in der ISO 4599 beschriebenen "Biegestreifenmethode" ermittelte Bruchdehnung herangezogen. Hierfür wurden Zugprüfkörper längs und quer zur Extrusionsrichtung aus den Verbundtafeln gearbeitet und über Biegeschablonen mit den Radien rl=1000 mm; r2= 500 mm gespannt. Die so unter Zugspannung stehenden Glanzschichtoberseiten wurden mit einer Mischung aus Olivenöl/Ölsäure (1:1) bestrichen. Nach 24 h Lagerung wurden die Prüfkörper im Zugversuch gemäß ISO 527 gemessen. Als Referenz wurden auch die eingespannten Zugprüfkörper ohne Medieneinwirkung (Luft) gemessen (im Folgenden mit 0-Probe gekennzeichnet).

Die Ergebnisse der Spannungsrissuntersuchungen zeigen, dass herkömmliche Deckschichten gemäß Vergleichsversuchen V1 und V2 gegenüber dem Prüfmedium Olivenöl/ Ölsäure (OÖ/ÖS) sehr spannungsrissanfällig sind. Die Stäbe brechen überwiegend innerhalb der Kontaktzeit von 24 Stunden. Die Beispiele B1 bis B7 zeigen, dass die Bruchdehnungen mit zunehmendem S-TPE-Anteil deutlich steigen; die Deckschichten sind wesentlich spannungsrissbeständiger.

Bei 40 % Styroflex - Modifizierung (Beispiel B5) erhält man eine sehr hohe Spannungsrißbeständigkeit (ESCR). Glanz und Kratzfestigkeit (Tabelle. 4) der Deckschicht erreichen jedoch nicht das Niveau wie bei geringerer Styroflex-modifizierung.

### Ergebnisse der Untersuchungen zur Kratzfestigkeit:

Die Glanzschichtseiten wurden mit dem Scratch-Tester bei 3 Kratzbelastungen: F=0,7 N / 1,4 N / 2,6 N geprüft (Diamant-Spitzenwinkel= 120° / Radius = 0,2 mm)

**Tabelle 4**

| Kratzfestigkeiten, Kratztiefe [µm] | | | |
|---|---|---|---|
| Kratztiefe (µm) bei: Verbundschichtplatte: | F = 0,7 N | F = 1,4 N | F = 2,6 N |
| V1 | 1,0 | 4,9 | 12 |
| V2 | 0,9 | 4,8 | 9 |
| B1 | 1,2 | 5 | 8 |
| B2 | 1,3 | 5,2 | 7 |
| B3 | 1,2 | 5,3 | 7.5 |
| B4 | 1, 6 | 6,1 | 12 |
| B5 | 3,8 | 10 | 22 |
| B6 | 1,1 | 5,8 | 11 |
| B7 | 1,0 | 4,1 | 9,7 |

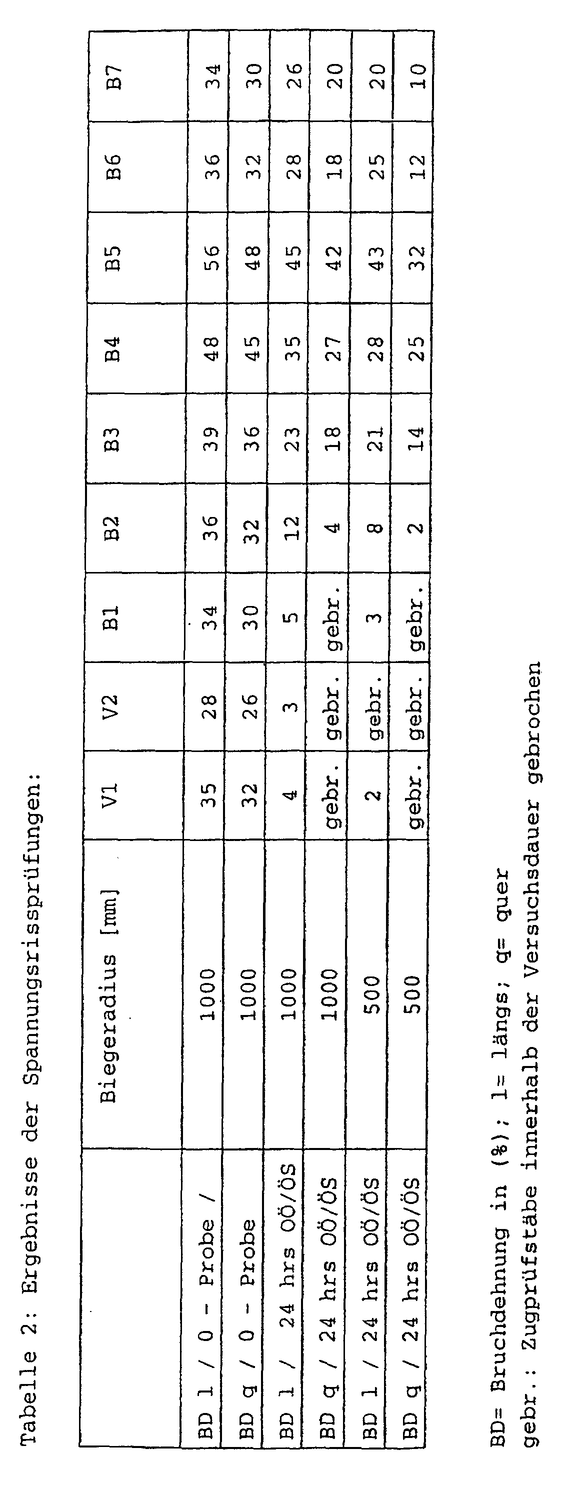

## Patentansprüche

1. Verfahren zur Erhöhung der Spannungsrissbeständigkeit von Polystyrolformmassen, bestehend aus einem glänzenden, schlagzähen Polystyrol (HIPS) mit einem Oberflächenglanz von mehr als 40%, gemessen unter einem Messwinkel von 60° nach DIN 67530, oder eine Mischung davon mit Standardpolystyrol (GPPS) **dadurch gekennzeichnet, dass** man der Polystyrolformmasse ein thermoplastisches Elastomer auf Basis von Styrol (S-TPE) zumischt.

2. Polystyrolformmasse, enthaltend
A) 70 bis 95 Gew.-% eines glänzenden, schlagzähen Polystyrols (HIPS) mit einem Oberflächenglanz von mehr als 40%, gemessen unter einem Messwinkel von 60°nach DIN 67530, oder eine Mischung davon mit Standardpolystyrol (GPPS) und
B) 5 bis 30 Gew.-% eines thermoplastischen Elastomeren auf Basis von Styrol (S-TPE).

3. Polystyrolformmasse nach Anspruch 2, **dadurch gekennzeichnet, dass** das S-TPE eine Reißdehnung von mehr als 300 %, gemessen nach ISO 527, aufweist.

4. Polystyrolformmasse nach Anspruch 2 oder 3, **dadurch gekennzeichnet, dass** sie als S-TPE ein lineares oder sternförmiges Styrol-Butadien-Blockcopolymer mit außenliegenden Polystyrolblöcken S und dazwischenliegenden Styrol-Butadien-Copolymerblöcken mit statistischer Styrol/Butadien-Verteilung (S/B)_{random} oder einem Styrolgradienten (S/B)ₜₐₚₑᵣ enthält.

5. Verbundschichtplatte oder -folie, enthaltend eine Substratschicht aus einem amorphen Styrolpolymeren und eine Deckschicht aus einer Polystyrolformmasse gemäß den Ansprüchen 2 bis 4.

6. Verbundschichtplatte oder -folie nach Anspruch 5, **dadurch gekennzeichnet, dass** die Substratschicht ein spannungsrißbeständiges, schlagzähes Polystyrol enthält.

7. Verbundschichtplatte oder -folie nach Anspruch 5 oder 6, **dadurch gekennzeichnet, dass** die Deckschicht eine Schichtdicke von 1 bis 10%, bezogen auf die Gesamtdicke der Verbundschichtplatte oder -folie, aufweist.

8. Verbundschichtplatte oder- folie nach einem der Ansprüche 5 bis 7, **dadurch gekennzeichnet, dass** die Gesamtdicke 0,1 bis 10 mm beträgt.

9. Verfahren zur Herstellung von Kühlgeräteformteilen, **dadurch gekennzeichnet, dass** man eine Polystyrolformmasse gemäß einem der Ansprüche 2 bis 4 einsetzt.

10. Verfahren zur Herstellung von Kühlgeräteformteilen, **dadurch gekennzeichnet, dass** man eine Verbundschichtplatte oder - folie gemäß einem der Ansprüche 5 bis 8 einsetzt.

## Claims

1. A process for increasing the stress-cracking resistance of polystyrene molding compositions, composed of a glossy impact-modified polystyrene (HIPS) with a surface gloss of more than 40%, measured at an angle of 60° to DIN 67530, or a mixture thereof with standard polystyrene (GPPS), which comprises admixing a styrene-based thermoplastic elastomer (STPE) with the polystyrene molding composition.

2. A polystyrene molding composition comprising
A) from 70 to 95% by weight of a glossy impact-modified polystyrene (HIPS) with a surface gloss of more than 40%, measured at an angle of 60° to DIN 67530, or a mixture thereof with standard polystyrene (GPPS), and
B) from 5 to 30% by weight of a styrene-based thermoplastic elastomer (STPE).

3. A polystyrene molding composition as claimed in claim 2, wherein the STPE has a tensile strain at break of more than 300%, measured to ISO 527.

4. A polystyrene molding composition as claimed in claim 2 or 3, wherein the STPE present is a linear or star-type styrene-butadiene block copolymer with external polystyrene blocks S and, between these, styrene-butadiene copolymer blocks with a random styrene/butadiene distribution (S/B)_{random}, or with a styrene gradient (S/B)ₜₐₚₑᵣ.

5. A composite layered sheet or composite layered film comprising a substrate layer made from an amorphous styrene polymer and comprising an outer layer made from a polystyrene molding composition as claimed in any of claims 2 to 4.

6. A composite layered sheet or composite layered film as claimed in claim 5, wherein the substrate layer comprises a stress-cracking-resistant, impact-modified polystyrene.

7. A composite layered sheet or composite layered film as claimed in claim 5 or 6, wherein the outer layer has a thickness of from 1 to 10%, based on the total thickness of the composite layered sheet or composite layered film.

8. A composite layered sheet or composite layered film as claimed in any of claims 5 to 7, whose total thickness is from 0.1 to 10 mm.

9. A process for producing moldings for refrigeration equipment, which comprises using a polystyrene molding composition as claimed in any of claims 2 to 4.

10. A process for producing moldings for refrigeration equipment, which comprises using a composite layered sheet or composite layered film as claimed in any of claims 5 to 8.

## Revendications

1. Procédé pour augmenter la résistance au fendillement par contrainte de masses de moulage de polystyrène, constituées d'un polystyrène brillant, résistant au choc (HIPS) présentant un éclat superficiel de plus de 40 %, mesuré sous un angle de mesure de 60° selon la norme DIN 67530, ou d'un mélange de celui-ci avec du polystyrène standard (GPPS), **caractérisé en ce qu'**à la masse de moulage de polystyrène on mélange un élastomère thermoplastique à base de styrène (S-TPE).

2. Masse de moulage de polystyrène, contenant
a) 70 à 95 % en poids d'un polystyrène brillant, résistant au choc (HIPS) présentant un éclat superficiel supérieur à 40 %, mesuré sous un angle de mesure de 60° selon la norme DIN 67530, ou d'un mélange de celui-ci avec du polystyrène standard (GPPS), et
b) 5 à 30 % en poids d'une élastomère thermoplastique à base de styrène (S-TPE).

3. Masse de moulage de polystyrène suivant la revendication 2, **caractérisée en ce que** le S-TPE présente un allongement à la rupture de plus de 300 %, mesuré selon la norme ISO 527.

4. Masse de moulage de polystyrène suivant l'une des revendications 2 et 3, **caractérisée en ce qu'**elle contient, comme S-TPE, un copolymère bloc de styrène-butadiène linéaire ou en forme d'étoile comportant des blocs de polystyrène S situés à l'extérieur et des blocs de copolymère de styrène-butadiène intermédiaires avec une répartition statistique de styrène / butadiène (S/B)_{aléatoire} ou un gradient de styrène (S/B) _{décroissant}.

5. Panneau ou feuille stratifié, contenant une couche de substrat à base d'un polymère de styrène amorphe et une couche de recouvrement à base d'une masse de moulage de polystyrène suivant les revendications 2 à 4.

6. Panneau ou feuille stratifié suivant la revendication 5, **caractérisé en ce que** la couche de substrat contient un polystyrène résistant au fendillement par contrainte et résistant au choc.

7. Panneau ou feuille stratifié suivant l'une des revendications 5 et 6, **caractérisé en ce que** la couche de recouvrement présente une épaisseur de couche de 1 à 10 %, par rapport à l'épaisseur totale du panneau ou feuille stratifié.

8. Panneau ou feuille stratifié suivant l'une des revendications 5 à 7, **caractérisé en ce que** l'épaisseur totale est de 0,1 à 10 mm.

9. Procédé de fabrication de pièces d'appareils de réfrigération **caractérisé en ce qu'**on met en oeuvre une masse de moulage de polystyrène suivant l'une des revendications 2 à 4.

10. Procédé de fabrication de pièces d'appareils de réfrigération, **caractérisé en ce qu'**on met en oeuvre un panneau ou feuille stratifié suivant l'une des revendications 5 à 8.
